(19) Europäisches Patentamt / European Patent Office / Office européen des brevets

(11) **EP 3 251 063 B1**

(12) **FASCICULE DE BREVET EUROPEEN**

(45) Date de publication et mention de la délivrance du brevet:
**08.07.2020 Bulletin 2020/28**

(21) Numéro de dépôt: **16705240.6**

(22) Date de dépôt: **26.01.2016**

(51) Int Cl.:
*G06Q 10/02* *(2012.01)*      *G09F 15/00* *(2006.01)*
*G09F 19/22* *(2006.01)*      *G06Q 50/30* *(2012.01)*

(86) Numéro de dépôt international:
**PCT/FR2016/050160**

(87) Numéro de publication internationale:
**WO 2016/120559 (04.08.2016 Gazette 2016/31)**

(54) **SYSTÈME DE COVOITURAGE**

FAHRGEMEINSCHAFTSSYSTEM

CARPOOLING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.01.2015 FR 1550599**

(43) Date de publication de la demande:
**06.12.2017 Bulletin 2017/49**

(73) Titulaire: **Ecov**
**75020 Paris (FR)**

(72) Inventeurs:
• **BOUFFARD, Arnaud**
  **75020 Paris (FR)**
• **MATAGNE, Thomas**
  **75020 Paris (FR)**

(74) Mandataire: **Loyer & Abello**
**9, rue Anatole de la Forge**
**75017 Paris (FR)**

(56) Documents cités:
**WO-A1-2011/104486      WO-A2-2008/100489**
**WO-A2-2014/158289      US-A1- 2013 076 294**
**US-A1- 2014 195 283**

## Description

### Domaine technique de l'invention

L'invention se rapporte au domaine des systèmes de covoiturage.

### Etat de la technique

Le covoiturage consiste en l'utilisation conjointe et organisée d'un véhicule, par un conducteur non professionnel et un ou plusieurs tiers passagers, dans le but d'effectuer un trajet commun. Le covoiturage permet au conducteur et aux passagers de limiter les frais de déplacement tout en évitant une présence trop importante de véhicules sur les voiries en optimisant le taux de remplissage des véhicules. En outre, le covoiturage est une alternative ou une complémentarité efficace aux transports en communs qui ne sont pas toujours adaptés selon les trajets que les utilisateurs souhaitent réaliser.

Le document WO2014/158289 A2 décrit un système de communication dans le cadre du covoiturage.

Toute la difficulté du covoiturage réside dans l'organisation entre le conducteur et les passagers. En effet, un conducteur devant réaliser un trajet en voiture doit être informé du besoin de passagers souhaitant réaliser ce même trajet ou un trajet suffisamment proche pour être inclus dans son propre trajet.

Dans le cadre de trajets sur de longues distances, qui nécessitent une organisation de la part du conducteur devant prévoir à l'avance une heure de départ, un point de rencontre entre conducteur et passager(s), le temps de trajet, la circulation etc., l'organisation du covoiturage s'insère facilement dans l'organisation du trajet, le conducteur comme les passagers ayant suffisamment de temps pour gérer cette organisation.

Cependant, il n'existe pas de solution efficace pour le covoiturage sur de courtes distances pour lesquelles l'organisation se fait au moment du départ. Dans ce type de trajet, qui correspond généralement à un besoin immédiat, ni le conducteur ni les passagers n'ont le temps d'organiser un covoiturage.

### Objet de l'invention

Selon des modes de réalisation, l'invention fournit un système de covoiturage selon les revendications indépendantes 1 et 5.

Le système de covoiturage selon l'invention permet ainsi à un conducteur circulant déjà sur la voirie d'être informé de la présence de personnes souhaitant faire du covoiturage sur son trajet ou à proximité. En particulier, ce système permet au conducteur d'obtenir en cours de trajet une information sur la présence d'une personne souhaitant faire du covoiturage et située en aval de sa position par rapport à son trajet. Ainsi, le conducteur dispose de l'information pour un covoiturage durant son propre trajet suffisamment tôt pour pouvoir organiser le covoiturage.

Selon d'autres modes de réalisation avantageux, un tel système peut présenter une ou plusieurs des caractéristiques suivantes.

Selon un mode de réalisation compatible ne faisant pas partie de l'invention, l'ordre d'affichage comporte une information de tarif. Selon un mode de réalisation, l'ordre d'affichage comporte une information de nombre de personnes.

Différents moyens peuvent être prévus pour permettre aux utilisateurs de saisir leurs demandes de covoiturage. Selon un mode de réalisation, la station de covoiturage comporte en outre une borne de saisie, la borne de saisie comportant une interface utilisateur permettant la définition des données d'une demande de covoiturage par un utilisateur et une interface de communication reliée à l'élément d'affichage, l'interface de communication de la borne étant apte à transmettre l'ordre d'affichage de la demande de covoiturage à l'interface de communication de l'élément d'affichage. Selon un mode de réalisation, le système comporte en outre un système de traitement de données comportant une interface d'entrée apte à recevoir des données d'une demande de covoiturage depuis un service web, par exemple un site web optimisé pour les téléphones portables ou une application web pour téléphone portable ou un service de télécommunications, par exemple un service de messagerie téléphonique de type « SMS » (de l'anglais « Short Message Service »).

La distance entre la station de covoiturage et le ou les éléments d'affichage est déterminée de manière à fournir à la fois une information immédiatement utile aux conducteurs et à laisser un temps suffisant aux conducteurs pour prendre une décision quant à leur éventuel arrêt à la station de covoiturage.

Selon un mode de réalisation, l'élément d'affichage est situé en amont de la station de covoiturage par rapport au flux de circulation à une distance correspondant à la distance parcourue par un véhicule roulant à la vitesse maximale autorisée sur ladite voirie pendant entre 5 et 60 secondes, de préférence pendant entre 10 et 20 secondes.

L'étape de contrôle de la validité de la demande de covoiturage pour une station de covoiturage peut être réalisée de nombreuses manières.

Selon l'invention, le contrôle de validité comporte l'étape de contrôler la présence du demandeur dans la station de covoiturage. Un tel contrôle de la présence du demandeur dans la station de covoiturage permet d'éviter qu'un conducteur ne sorte du flux de circulation pour se rendre à la station de covoiturage et ne trouve pas le demandeur pour lequel il est sorti du flux de circulation.

Dans un mode de réalisation compatible ne faisant pas partie de l'invention, le demandeur fournit un horaire d'arrivée à la station de covoiturage lors de sa saisie de demande de covoiturage. Dans une variante, cet horaire d'arrivée du demandeur à la station de covoiturage est calculé automatiquement, par exemple par géolocalisation du téléphone portable, consultation d'horaires d'arrivée d'un transport en commun indiqué par le demandeur ou tout autre moyen adapté.

Selon un mode de réalisation, la station de covoiturage comporte une pluralité de zones d'arrêt accessibles depuis la voirie et aptes à recevoir un véhicule provenant du flux de circulation, la station de covoiturage comportant en outre pour chaque zone d'arrêt un élément d'affichage complémentaire respectif, chaque élément d'affichage complémentaire comportant

- une interface de communication apte à recevoir une instruction d'affichage respective correspondant à une demande de covoiturage respective, ladite demande de covoiturage comportant au moins une information de destination,
- un moyen d'affichage apte à afficher les données de ladite demande de covoiturage contenues dans ladite instruction d'affichage,

et l'ordinateur est configuré pour transmettre à chaque élément d'affichage complémentaire une instruction d'affichage respective afin d'afficher sur ledit élément d'affichage complémentaire les données de la demande de covoiturage respective afin d'associer à chaque élément d'affichage complémentaire l'une parmi les demandes de covoiturage en attente de satisfaction.

Selon un mode de réalisation, chaque zone d'arrêt comporte en outre un moyen de détection apte à détecter l'arrêt d'un véhicule sur ladite zone d'arrêt, l'ordinateur étant configuré pour interrompre l'affichage de la demande de covoiturage sur l'élément d'affichage complémentaire correspondant à ladite zone d'arrêt en réponse à la détection de l'arrêt du véhicule sur ladite zone d'arrêt. La détection de l'arrêt d'un véhicule sur la zone d'arrêt dédiée peut être réalisée de nombreuses manières, par exemple à l'aide d'un capteur de présence de véhicule situé sur la voirie, au moyen d'une caméra par reconnaissance d'image, par géolocalisation du véhicule, ou suite à un message envoyé via un réseau distant en conséquence d'une acceptation de la demande par un conducteur lequel l'a émise depuis son véhicule etc

Selon l'invention, l'élément d'affichage est situé à une position fixe le long de la voirie en amont du flux de circulation.

Selon un mode de réalisation compatible ne faisant pas partie de l'invention, il est également fourni un procédé de gestion d'un système de covoiturage mis en oeuvre par ordinateur, le procédé comportant :

- recevoir une demande de covoiturage comportant un demandeur et une destination,
- contrôler la validité de la demande de covoiturage, le contrôle de validité comprenant l'étape de contrôler la présence du demandeur dans une station de covoiturage, la station de covoiturage étant située à proximité d'une voirie apte à accueillir un flux de circulation, la station de covoiturage comprenant une zone d'arrêt accessible depuis la voirie et apte à recevoir un véhicule provenant du flux de circulation,
- lorsque la demande de covoiturage est valide, transmettre un ordre d'affichage de la demande de covoiturage à un élément d'affichage situé en amont de la station de covoiturage par rapport au flux de circulation afin d'afficher la destination de la demande de covoiturage sur un moyen d'affichage de manière visible par des conducteurs des véhicules du flux de circulation.

Un tel ordinateur peut être réalisé de manière unitaire ou distribuée. Cet ordinateur peut être localisé à différentes positions. Ainsi, cet ordinateur peut être intégré une borne de saisie de la station de covoiturage, intégré à l'élément d'affichage de la station de covoiturage ou être un ordinateur distant de la station de covoiturage.

Selon d'autres modes de réalisation avantageux, un tel procédé de gestion peut présenter une ou plusieurs des caractéristiques suivantes.

Selon un mode de réalisation compatible ne faisant pas partie de l'invention, le contrôle de validité comprend l'étape de vérifier un état de paiement de la demande de covoiturage.

Selon un mode de réalisation, la station de covoiturage comporte une borne de saisie, la borne de saisie comportant :

⚬ une interface utilisateur permettant la définition des données d'une demande de covoiturage par un utilisateur,

⚬ une interface de communication reliée à l'élément d'affichage, l'interface de communication de la borne étant apte à transmettre l'ordre d'affichage de la demande de covoiturage à l'interface de communication de l'élément d'affichage.

Selon un mode de réalisation compatible ne faisant pas partie de l'invention, le procédé comporte en outre :

⚬ recevoir des données de la demande de covoiturage depuis l'interface utilisateur,

et l'étape de transmission de l'ordre d'affichage de la demande de covoiturage est effectuée par l'interface de communication de la borne.

Selon un autre mode de réalisation, la demande de covoiturage est reçue depuis le service web ou le service de télécommunications, par exemple sous la forme d'un SMS ou d'un formulaire web.

Selon un mode de réalisation, le procédé comporte en outre :

⚬ recevoir des données de départ associées à une demande de covoiturage

◦ interrompre l'affichage de données de la demande de covoiturage par l'élément d'affichage en réponse à la réception des données de départ associées à ladite demande de covoiturage.

Grâce à ces caractéristiques, une demande peut être désaffichée dès qu'elle est satisfaite de sorte que les informations affichées sur le ou les éléments d'affichage restent actuelles et pertinentes au cours du temps.

Selon un mode de réalisation, le procédé comporte en outre :

◦ calculer le temps écoulé depuis la réception des données de la demande de covoiturage
◦ interrompre l'affichage de données de ladite demande de covoiturage par l'élément d'affichage en réponse à un calcul de temps écoulé supérieur à un seuil de temps écoulé.

Selon un mode de réalisation, le procédé comporte en outre :
◦ interrompre l'affichage de données de ladite demande de covoiturage par l'élément d'affichage en réponse à une détection de l'éloignement physique entre le demandeur et la station de covoiturage. Le contrôle de la présence du demandeur ainsi que la détection de l'éloignement physique de la station de covoiturage du demandeur peut se faire par géolocalisation au moyen d'une application dédiée ou par interruption de communication directe entre un élément possédé par le demandeur et la borne de saisie par exemple par l'interruption d'une connexion bluetooth entre le téléphone portable du demandeur et la borne de saisie ou tout autre moyen.

Grâce à ces caractéristiques, on prévoit une expiration automatique de la demande de covoiturage permettant son désaffichage même lorsque le demandeur a omis de signaler son départ de la station de covoiturage. En outre, cette caractéristique permet, lorsque la demande de covoiturage a été validée en fournissant un horaire d'arrivée du demandeur à la station de covoiturage, de s'assurer que le demandeur est bien en chemin pour la station de covoiturage et, dans le cas contraire, de désafficher la demande de covoiturage.

Selon un mode de réalisation, le procédé comporte en outre :

◦ calculer un tarif de demande de covoiturage en fonction d'un coût kilométrique déterminé, ou de toute autre formule de calcul prédéterminée et par exemple de la destination de la demande de covoiturage
◦ transmettre le tarif calculé à l'élément d'affichage afin d'afficher le tarif calculé de la demande de covoiturage sur le moyen d'affichage de manière visible par des conducteurs des véhicules du flux de circulation. L'affichage du tarif calculé permet de faciliter la prise de décision pour les conducteurs.

Grâce à ces caractéristiques, les conducteurs et utilisateurs n'ont pas à engager de négociations sur le prix du service, ce qui facilite le consensus entre conducteurs et utilisateurs et fluidifie l'exploitation du service de covoiturage.

Selon un mode de réalisation, le procédé comporte en outre :

- calculer un itinéraire multimodal entre la station de covoiturage et la destination comportant une combinaison de modes de transport distincts incluant le covoiturage.

Grâce à cette caractéristique, un itinéraire optimisé de façon globale, en particulier en matière de temps de trajet, peut être calculé pour le demandeur.

Selon un mode de réalisation compatible ne faisant pas partie de l'invention, le procédé comporte en outre :

- calculer un itinéraire entre la station de covoiturage et la destination via plusieurs covoiturages faisant appel à plusieurs stations de covoiturage de manière consécutives, et/ou en combinaison avec d'autres moyens de transport.

Grâce à cette caractéristique, un itinéraire optimisé de façon globale, en particulier en matière de temps de trajet, peut être calculé pour le demandeur.

Selon un mode de réalisation, le procédé comporte en outre :

- interrompre l'affichage de données de la demande de covoiturage par l'élément d'affichage en réponse à l'identification de l'arrêt d'un véhicule sur une zone d'arrêt dédiée correspondant à la demande de covoiturage.

Un aspect de l'invention part de l'idée de permettre l'organisation d'un covoiturage de manière rapide et efficace. Une idée de l'invention est de permettre cette organisation avec un préavis assez bref, alors que le conducteur est en cours de trajet. Un aspect de l'invention part de l'idée d'informer le conducteur d'un besoin de covoiturage correspondant à sa propre direction ou destination sans perturber la sécurité de sa conduite. Un aspect de l'invention part de l'idée de fournir des données fiables et actualisées sur les possibilités de covoiturage à un conducteur durant son trajet.

Un autre aspect de l'invention part de l'idée de permettre à un passager souhaitant effectuer un trajet de définir une demande de covoiturage correspondant à un besoin de covoiturage immédiat ou à brève échéance. Un aspect de l'invention part de l'idée de permettre de satisfaire de manière simple et rapide une demande de covoiturage correspondant à un besoin de mobilité immédiat ou à brève échéance, en particulier un besoin de covoiturage immédiat ou à brève échéance.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

Sur ces figures :

- **La figure 1** est une représentation schématique d'un système de covoiturage comportant une station de covoiturage et un élément d'affichage;
- **La figure 2** est une représentation schématique d'un système de covoiturage installé à proximité d'une voirie au niveau de laquelle se croisent ou se rejoignent une pluralité de flux de circulation ;
- **La figure 3** représente schématiquement le mode de fonctionnement d'une borne de saisie d'une station de covoiturage lors de la génération d'une demande de covoiturage sur la borne de saisie ;
- **La figure 4** représente schématiquement le mode de fonctionnement d'un élément d'affichage ;
- **La figure 5** représente schématiquement le mode de fonctionnement de la borne de saisie de la figure 3 hors saisie de demande de covoiturage ;
- **La figure 6** représente schématiquement un système de covoiturage comprenant un système informatique de gestion.

Dans la description et les revendications, on utilisera, les termes "amont" et "aval" par rapport à un flux de circulation de véhicule sur une voie de circulation et circulant dans un sens de circulation donné. Ainsi, un premier élément situé en amont d'un second élément par rapport à un flux de circulation est situé à distance du second élément de sorte qu'un véhicule circulant dans ledit flux de circulation croise le premier élément préalablement au second élément.

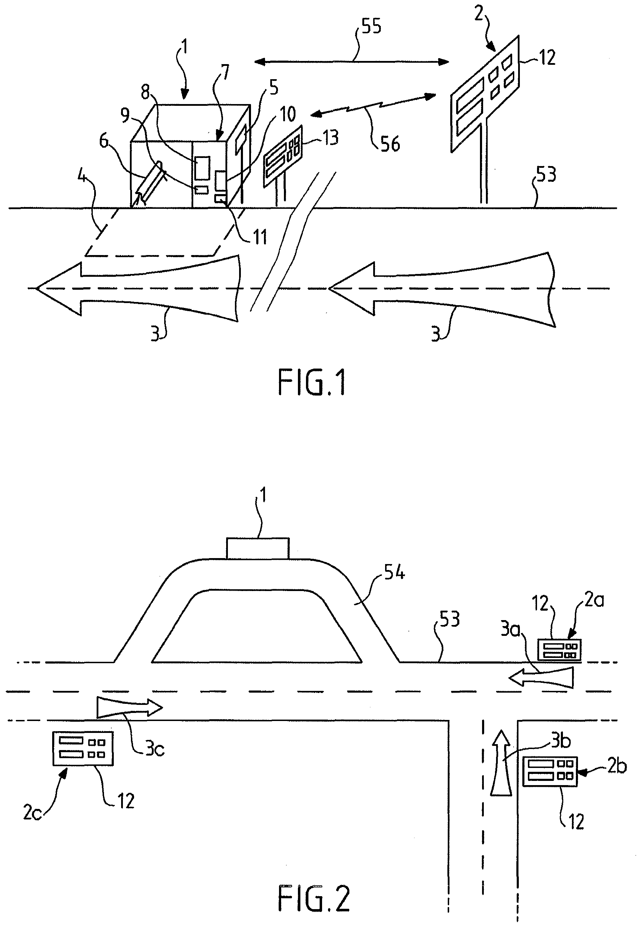

La figure 1 est une représentation schématique d'un système de covoiturage comportant une station de covoiturage 1 et un élément d'affichage 2.

La station de covoiturage est installée à proximité d'une voirie 53 comportant un unique flux de circulation 3. L'expression « à proximité de la voirie » signifie accessible pour un véhicule circulant sur la voirie dans le flux de circulation 3, le véhicule pouvant s'extraire du flux de circulation pour accéder directement ou via une voie dédiée à la station de covoiturage 1. Ainsi, une station de covoiturage 1 peut être installée directement en bordure de la voirie 53, comme illustrée sur la figure 1, sur une voie dédiée de type voie dépose-minute 54 comme illustrée sur la figure 2, sur une aire de stationnement, un renfoncement en bordure de voirie, une prolongation du revêtement de la voie de circulation ou une zone de stationnement ou tout autre aménagement accessible depuis la voie de circulation de la voirie 53.

La station de covoiturage 1 comporte une zone d'arrêt 4 destinée à recevoir un véhicule en provenance du flux de circulation 3. La station de covoiturage 1 comporte un élément de signalisation 5 permettant l'identification de la station de covoiturage 1. L'élément de signalisation est par exemple un panneau de signalisation routière dédié. La station de covoiturage 1 comporte en outre tout type de mobilier urbain 6 améliorant le confort comme par exemple un abri contre le vent et/ou la pluie, un banc, un éclairage, des panneaux de renseignement sur d'autres modes de transports ou autre.

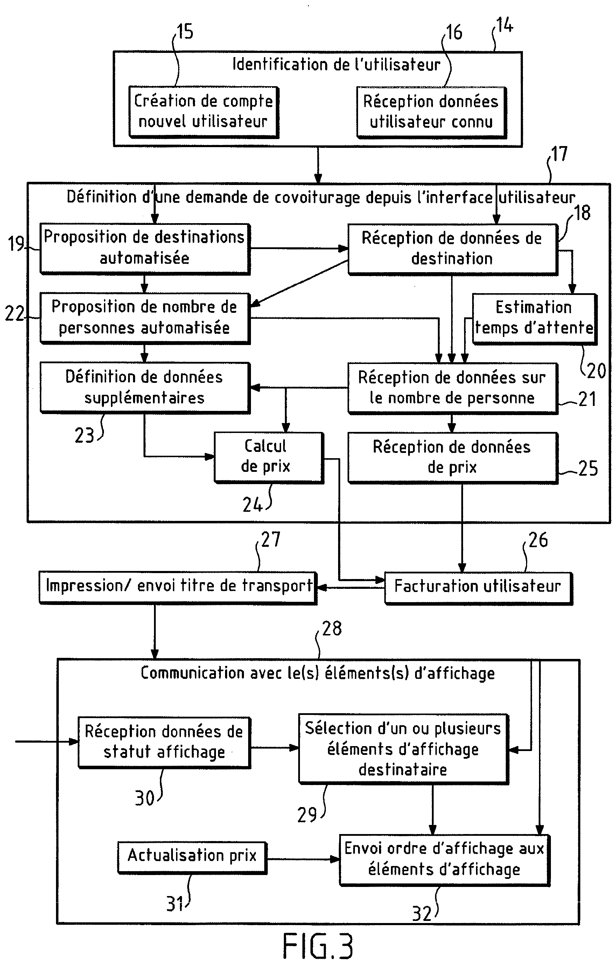

La station de covoiturage 1 comporte une borne de saisie 7 dont le fonctionnement sera détaillé ci-dessous en regard des figures 3 à 6.

La borne de saisie 7 comporte une interface utilisateur permettant à un utilisateur de définir une demande en covoiturage. L'interface utilisateur illustrée sur la figure 1 comporte un écran d'affichage 8, un organe de saisie 9, un terminal de paiement 10 et une imprimante 11. La borne de saisie 7 comporte également un bouton (non illustré) dédié à l'indication de fin de validité d'une demande de covoiturage.

Alternativement, l'interface utilisateur pourrait comporter un écran tactile, un clavier, une souris, un rouleau de défilement ou tout autre dispositif permettant l'affichage et la saisie des données relatives à une demande de covoiturage.

Afin de gérer ses différentes fonctionnalités, la borne de saisie 7 comporte un ordinateur connecté à un réseau distant tel qu'internet.

La borne de saisie 7 comporte également une interface de communication. L'interface de communication de la borne de saisie 7 comporte un émetteur/récepteur de radiofréquences.

Dans un mode de réalisation, la borne de saisie 7 comporte également un lecteur de carte RFID, NFC ou autre qui soit compatible avec des dispositifs d'identification des usagers tels que des cartes de transport sans contact, téléphones portables etc.

Le terminal de paiement 10 est un terminal de paiement pour carte bancaire, carte de paiement sans contact, espèce ou autre.

Dans un mode de réalisation non illustré, la borne de saisie 7 comporte également des dispositifs usagers complémentaires tels qu'une prise pour rechargement d'équipement électronique, un émetteur wifi, etc.

L'élément d'affichage 2 est disposé en amont de la station de covoiturage 1 par rapport au flux de circulation 3. La borne de saisie 7 et l'élément d'affichage 2 sont connectés localement par radiofréquences. L'élément d'affichage comporte un récepteur radio permettant de recevoir par radiofréquences des données de demande de covoiturage à savoir des ordres d'affichage et de désaffichage des demandes de covoiturage depuis la borne de saisie 7. En outre, l'élément d'affichage 2 comporte un émetteur de radiofréquences permettant l'envoi, de manière périodique, d'un statut de fonctionnement de l'élément d'affichage.

Dans un mode de réalisation non illustré, la communication entre la borne de saisie 7 et l'élément d'affichage 2 peut être indirecte, par exemple via un serveur distant. Dans ce cas, la communication entre la borne de saisie et l'élément d'affichage 2 est par exemple réalisée à l'aide d'une communication GSM entre la borne de saisie 7 et le serveur distant et d'une communication GSM entre le serveur distant et l'élément d'affichage 2.

La distance 55 entre la station de covoiturage 1 et l'élément d'affichage 2 est adaptée à la vitesse autorisée sur la voirie de sorte qu'un conducteur dans le flux de circulation 3 rencontrant l'élément d'affichage 2 ait suffisamment de temps pour décider ou non de s'arrêter à la station de covoiturage 1. L'élément d'affichage 2 est installé de manière fixe sur le bord de la voirie en étant par exemple monté sur un poteau dédié ou sur un élément de voirie existant. La distance entre la station de covoiturage 1 et l'élément d'affichage 2 répond par exemple à l'équation suivante :

$$D_{affichage\text{-}station} = T_{déc\text{-}cond} * V_{max}$$

Dans laquelle la variable $D_{affichage\text{-}station}$ représente la distance entre la station de covoiturage 1 et l'élément d'affichage 2, la variable $T_{déc\text{-}cond}$ représente le temps moyen nécessaire à un conducteur circulant dans le flux de circulation 3 pour prendre la décision de s'arrêter et pour s'arrêter à la station de covoiturage 1, et la variable $V_{max}$ représente la vitesse maximale autorisée sur la voirie 53. A titre indicatif, pour une voirie ayant une vitesse maximale autorisée de 90 km/h, un temps de décision moyen de 20 secondes nécessite que l'élément d'affichage 2 soit situé à 500m en amont de la station de covoiturage 1 par rapport au flux de circulation 3. Selon les configurations, la variable $V_{max}$ peut également être remplacée par une variable $V_{moy}$ qui représente la vitesse moyenne constatée sur le segment de voirie constaté.

L'élément d'affichage 2 comporte un moyen d'affichage dynamique, par exemple un panneau à diode électroluminescentes 12 tel que ceux utilisés pour l'information routière ou pour les affichages municipaux. Le panneau 12 permet l'affichage d'informations de manière lisible et compréhensible par un conducteur du flux de circulation 3 facilement et sans danger. A titre d'exemple, les caractères affichés par le panneau 12 présentent une hauteur minimale de 320mm et de préférence de 400mm lorsque le panneau 12 est installé le long d'un axe routier sur lequel la circulation à une vitesse de 130km/h est autorisée. L'affichage du panneau 12 est adapté à la lecture par les conducteurs circulant dans le flux de circulation quelles que soient les conditions météorologiques (jour, nuit, plein soleil, pluie, etc.). Dans un autre exemple, lorsque la vitesse maximale autorisée sur un axe routier est de 90km/h, la hauteur minimale des caractères affichés par le panneau 12 est de 200mm et de préférence de 250mm.

Le panneau 12 comporte un affichage lumineux de type LED composé d'au moins une matrice de caractère. Dans le mode de réalisation illustré sur la figure 1, le panneau 12 comporte deux lignes composées d'une pluralité de matrices de caractères, chaque matrice étant adaptée à l'affichage de caractères présentant des caractéristiques identiques prédéfinies.

Alternativement, le panneau 12 pourrait comporter plus de deux lignes d'affichage distinctes de manière à afficher plus de deux demandes de covoiturage distinctes. De même, un panneau d'affichage (non illustré) pourrait comporter une unique matrice comportant un ensemble de diodes, une telle matrice étant apte à afficher une pluralité de caractères ayant des caractéristiques variables ainsi que d'autres éléments graphiques.

Le panneau 12 illustré sur la figure 1 est fixé sur un support dédié. Cependant le panneau 12 pourrait être fixé sur tout support existant.

Différentes possibilités existent pour l'alimentation électrique de l'élément d'affichage 2. Selon un mode de réalisation, l'élément d'affichage 2 est relié à un circuit électrique existant, par exemple le circuit d'alimentation des éclairages publics. Selon un mode de réalisation, l'élément d'affichage 2 comporte une batterie permettant d'alimenter le panneau 12, par exemple lorsque l'alimentation électrique publique n'est pas disponible. Selon un mode de réalisation, l'élément d'affichage 2 comporte un panneau photovoltaïque (non représenté) apte à recharger ladite batterie (non représentée). Ces différentes possibilités peuvent être combinées de diverses manières.

Le panneau 12 comporte un dispositif de protection (non illustré) contre le rayonnement solaire. Un tel dispositif de protection comporte par exemple un rebord situé en partie supérieure du panneau 12 et se développant au-dessus de l'affichage formé par l'ensemble des lignes de matrices de caractères. Dans un autre mode de réalisation, des rebords de petite taille se développent au-dessus de chaque ligne de matrice de caractère. Ce dispositif de protection améliore la lisibilité du panneau 12 pour les conducteurs du flux de circulation 3 et réduit la consommation énergétique du panneau 12.

Selon un mode de réalisation, l'élément d'affichage 2 comporte un capteur de luminosité permettant d'adapter la luminosité du panneau 12 à la luminosité ambiante.

Selon un mode de réalisation, l'élément d'affichage 2 comporte un capteur de présence de véhicule à distance (non illustré). Ce capteur est par exemple similaire aux radars routiers utilisant l'effet doppler. Le capteur de présence asservit l'activation du panneau 12 à la présence de véhicules dans le flux de circulation 3. Le panneau 12 est ainsi commuté dans un mode de consommation réduite, par exemple en veille, si aucun véhicule n'est détecté. L'élément d'affichage 2 peut également comporter un dispositif de comptage du trafic sur la voirie. Un tel dispositif de comptage peut également être installé au niveau de la borne de saisie 7. Le dispositif de comptage au niveau de la borne de saisie 7 permet d'obtenir des données de trafic dans le flux de circulation passant au niveau de la station de covoiturage 1. Ces données de comptage permettent d'améliorer les estimations de temps d'attente d'un demandeur en fonction du nombre de véhicules compté dans le flux de circulation.

Dans un mode de réalisation, la station de covoiturage 1 comporte également un panneau 13 afin d'afficher de manière redondante les informations de covoiturage affichées par le panneau 12.

La station de covoiturage 1 comporte un dispositif de sécurité (non illustré) tel qu'un lecteur de plaque d'immatriculation, une caméra de surveillance, un dispositif de photographie ou autre permettant d'enregistrer l'identification du véhicule s'arrêtant dans la zone d'arrêt 4.

La station de covoiturage 1 comporte une horloge (non illustrée) permettant de mettre en veille les éléments consommateurs d'énergie de la station de covoiturage 1 au-delà d'un délai pendant lequel la borne de saisie 7 n'a pas été utilisée.

Dans un mode de réalisation, la station de covoiturage 1 comporte un dispositif de détection de présence de véhicule (non illustré). Le dispositif de présence de véhicule peut prendre de nombreuses formes, par exemple un capteur de poids associé à la zone d'arrêt ou encore une caméra associée à la zone d'arrêt 4.

Dans un mode de réalisation, la station de covoiturage 1 comporte une pluralité de zones d'arrêt 4. Chaque zone d'arrêt 4 est associée à un panneau complémentaire respectif. Les panneaux complémentaires affichent chacun une demande de covoiturage en cours de manière redondante avec l'élément d'affichage 2. Cependant, dans ce mode de réalisation, chaque demande de covoiturage n'est affichée que sur un unique panneau complémentaire. Ainsi, chaque demande de covoiturage est associée à une unique zone d'arrêt 4. Un conducteur souhaitant répondre positivement à une demande de covoiturage lue sur le panneau 12 vient donc directement stationner sur la zone d'arrêt 4 comportant le panneau complémentaire affichant la demande de covoiturage correspondante. En outre, chaque demandeur peut attendre au niveau de la zone d'arrêt 4 affichant sa demande de covoiturage. Dans un perfectionnement, chaque zone d'arrêt 4 est en outre associée à un dispositif de détection de présence de véhicule (non illustré). Ainsi, dès lors qu'un véhicule s'arrête sur une zone d'arrêt 4, la demande de covoiturage affichée par le panneau complémentaire correspondant est considérée comme traitée et est désaffichée du panneau complémentaire ainsi que du panneau 12 de l'élément d'affichage 2.

La figure 3 représente schématiquement le mode de fonctionnement d'une borne de saisie 7 d'une station de covoiturage 1 lors de la génération d'une demande de covoiturage sur la borne de saisie 7.

Une demande de covoiturage ne peut être traitée que si la personne effectuant la demande, ci-après dénommée le demandeur, est effectivement présente à la station de covoiturage 1. Dans un mode de réalisation, la demande peut être générée à distance, par exemple via une application web ou une application pour téléphone portable dédiée, cependant, la transmission de l'ordre d'affichage au panneau d'affichage 12 n'est réalisée que lorsque le demandeur est physiquement à proximité de la station. Seules les données de demande de covoiturage pour lesquelles le demandeur est effectivement présent à la station de covoiturage 1 sont affichées. Cette condition permet d'éviter qu'un conducteur ne sorte du flux de circulation 3 pour se rendre à la station de covoiturage 1 et ne trouve pas le demandeur pour lequel il est sorti du flux de circulation 3 à la station de covoiturage 1.

Dans un autre mode de réalisation, la demande de covoiturage est générée à distance, via une application web ou une application portable dédiée, et comporte un horaire d'arrivée du demandeur à la station de covoiturage 1. Les informations de covoiturage affichées sur le panneau d'affichage 12 comportent éventuellement l'horaire d'arrivée du demandeur. Dans ce mode de réalisation, la position du demandeur peut être contrôlée afin de s'assurer qu'il sera effectivement présent à l'heure indiquée à la station de covoiturage 1. Ce contrôle de la position du demandeur peut est effectuée de toute manière adaptée, par exemple par géolocalisation du téléphone portable du demandeur ou autre. L'ordre d'affichage au panneau d'affichage 12 peut être envoyée peu de temps avant l'horaire d'arrivée indiqué, par exemple 5 à 10 minutes avant, afin de prévenir les conducteur dans le flux de circulation 3 qu'un demandeur arrivera sous peu et souhaite se rendre à une destination donnée.

Une première étape 14 lorsqu'un demandeur arrive à la station de covoiturage 1 est d'identifier le demandeur à la borne de saisie 7. Pour cela, l'utilisateur utilise l'organe de saisie 9 de la borne de saisie 7. Si le demandeur n'est pas enregistré dans une base de données regroupant les données d'identification de demandeurs connus, le demandeur doit créer un compte d'identification à l'aide de l'organe de saisie 9 (étape 15). Si le demandeur possède déjà un compte d'identification, les données relatives au compte, si elles ne sont pas déjà en mémoire, sont téléchargées par la borne de saisie 7 (étape 16).

Dans un mode de réalisation, la création d'un compte d'identification peut être réalisée à l'aide d'une interface internet ou d'une application pour téléphone portable.

Dans un mode de réalisation non illustré, l'identification du demandeur arrivé à la station de covoiturage 1 peut se faire à l'aide d'une carte sans contact telle qu'une carte de transport ou tout autre dispositif adapté et nécessitant la présence proche de la personne identifiée.

Lors d'une seconde étape 17, il est nécessaire de définir la demande de covoiturage depuis l'interface utilisateur. Le demandeur doit renseigner a minima une destination souhaitée et le nombre de personnes concernées par la demande de covoiturage.

La saisie de la destination peut se faire soit de manière libre via l'organe de saisie 9, soit de manière semi-automatique.

Lors de la saisie de destination de manière libre, la borne de saisie 7 reçoit une destination (étape 18) choisie librement par le demandeur.

Lors de la saisie semi-automatique, l'écran d'affichage 8 de l'interface utilisateur affiche une liste de destinations proposées (étape 19). La borne de saisie 7 reçoit alors la sélection d'une destination par le demandeur (étape 18) parmi les destinations de la liste. Les destinations proposées de manière semi-automatique sont par exemple les destinations usuelles demandées à cette borne, les destinations usuelles choisies par le demandeur identifié, les destinations correspondant aux premières lettres entrées par l'utilisateur etc.

Dans un mode de réalisation, la saisie de destination se fait à l'aide d'une carte affichée sur l'écran d'affichage 8 de la borne de saisie 7. Dans un mode de réalisation, lorsque la destination saisie est trop précise (trop petite localité, localité trop éloignée des flux de circulations principaux), la borne de saisie 7 propose une destination plus adaptée proche de la destination saisie, c'est-à-dire proche de la destination saisie mais à proximité d'un flux de circulation important.

Dans un mode de réalisation, la saisie de la destination conduit à interroger un calculateur multimodal, permettant de proposer une combinaison de modes de transport, incluant le covoiturage, de telle sorte que le déplacement global est optimisé en temps de trajet. En particulier, le calculateur multimodal permet de déterminer le segment de trajet en covoiturage le plus pertinent par rapport aux autres modes de transport (bus, métro, train, etc.) existant pris seuls ou en combinaison. L'interrogation du calculateur multimodal est par exemple basée sur un temps d'attente estimé. Au-delà d'une valeur seuil du temps d'attente estimé, il est considéré qu'une solution multimodale peut s'avérer plus pertinente. En conséquence, le calculateur multimodal est interrogé afin d'établir un itinéraire optimisé entre la station de covoiturage et la destination saisie. Le calculateur multimodal peut être constitué d'un module local de la borne de saisie 7 ou géré par un système distant.

En fonction de la destination saisie par le demandeur, la borne peut calculer et afficher une estimation de temps d'attente avant que la demande ne soit satisfaite (étape 20). Cette estimation est calculée sur la base de données théoriques calculées au moyen de modèles de simulation de déplacements ou de flux (non représentés ici), sur la base de paramètres pouvant être modulés en fonction de l'heure de la journée, du jour de la semaine, de la date et des données de comptage du trafic au niveau de l'élément d'affichage et/ou au niveau de la borne de saisie 7, des données collectées et produites par les utilisateurs du système ou tout autre paramètre pertinent.

La définition du nombre de personnes est analogue à la définition de la destination. La saisie du nombre de personnes (étape 21) peut ainsi être libre ou semi-automatique suite à la proposition d'un nombre de personnes usuellement demandé à la borne ou bien par le demandeur identifié (étape 22).

La définition de la demande de covoiturage peut comporter, de manière optionnelle, la définition de données additionnelles (étape 23) comme par exemple sur le sexe du conducteur, la présence d'un animal, un besoin de véhicule adapté aux personnes handicapées ou autre.

La borne de saisie 7 calcule automatiquement une indemnité de covoiturage (étape 24) en fonction de la localisation de la station de covoiturage 1 et de la destination demandée. Ce calcul peut par exemple être modulé selon l'heure de la journée, du jour de la semaine, de la date, la zone géographique et le flux de voiture estimé associé etc., l'indemnité calculée étant plus ou moins élevée selon les situations. Une indemnité basse incite les personnes souhaitant effectuer un trajet à utiliser le covoiturage. Par ailleurs, une indemnité élevée incite les conducteurs à satisfaire les demandes de covoiturage.

Alternativement, la borne de saisie propose une plage d'indemnisation et le demandeur saisit (étape 25) l'indemnisation en fonction de la plage proposée.

Dès lors que la demande est définie, le compte de l'utilisateur est facturé de l'indemnisation correspondante (étape 26). Si le compte du demandeur n'est pas suffisamment approvisionné, le demandeur doit alimenter son compte à l'aide du terminal de paiement 10 à défaut la demande de covoiturage n'est pas traitée par le système informatique.

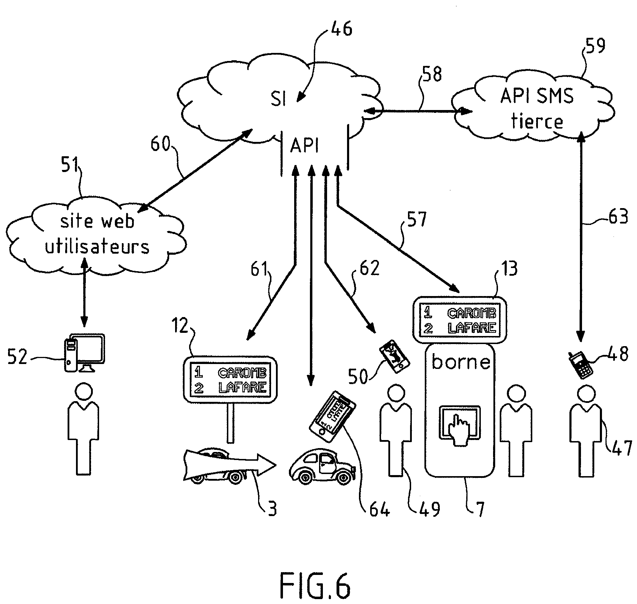

Après facturation, la borne de saisie 7 imprime un titre de transport (étape 27) à l'aide de l'imprimante 11. Alternativement, le demandeur peut choisir de recevoir son titre de transport et/ou sa facture par courrier électronique ou par message sur son téléphone portable ou par le biais d'une application smartphone dédiée. Le titre de transport comporte un moyen d'identification de la demande de covoiturage tel qu'un code alphanumérique et/ou un code barre ou QR Code. Ce moyen d'identification permet ultérieurement au conducteur du véhicule qui aura satisfait la demande de covoiturage d'être indemnisé facilement en entrant le code d'identification du titre de transport sur une application dédiée ou sur un site web (voir figure 6). Le titre de transport peut être imprimé en deux exemplaires, un exemplaire étant destiné au conducteur et un exemplaire étant conservé par le demandeur.

La borne de saisie 7 communique ensuite les données de la demande de covoiturage à l'élément d'affichage 2 sous la forme d'un ordre d'affichage (étape 28).

Dans le cas d'un système de covoiturage comportant une pluralité d'éléments d'affichage 2 pour une même station de covoiturage 1, une sélection des éléments d'affichages 2 auxquels la demande est envoyée est réalisée (étape 29). Ainsi, les données de la demande de covoiturage sont envoyées aux seuls éléments d'affichages 2 correspondant à des flux de circulation 3 susceptibles de répondre à la demande, c'est-à-dire aux flux de circulation dirigés en direction de la destination demandée. L'étape 29 de sélection des éléments d'affichage 2 peut prendre en compte le statut de fonctionnement des éléments d'affichage 2. Pour cela, la borne de saisie 7 reçoit de façon régulière (étape 30) le statut des éléments d'affichages 2, afin qu'une panne puisse être rapidement détectée et remédiée.

Par ailleurs, la borne de saisie 7 peut calculer une évolution de l'indemnisation (étape 31), l'indemnisation augmentant par exemple à mesure que le temps d'attente du demandeur augmente. Cette évolution de l'indemnisation permet d'inciter les conducteurs à s'arrêter pour satisfaire les demandes de covoiturage. La borne de saisie envoie les données de la demande de covoiturage ainsi que toute actualisation de l'indemnisation à ou aux éléments d'affichages 2 sélectionnés (étape 32).

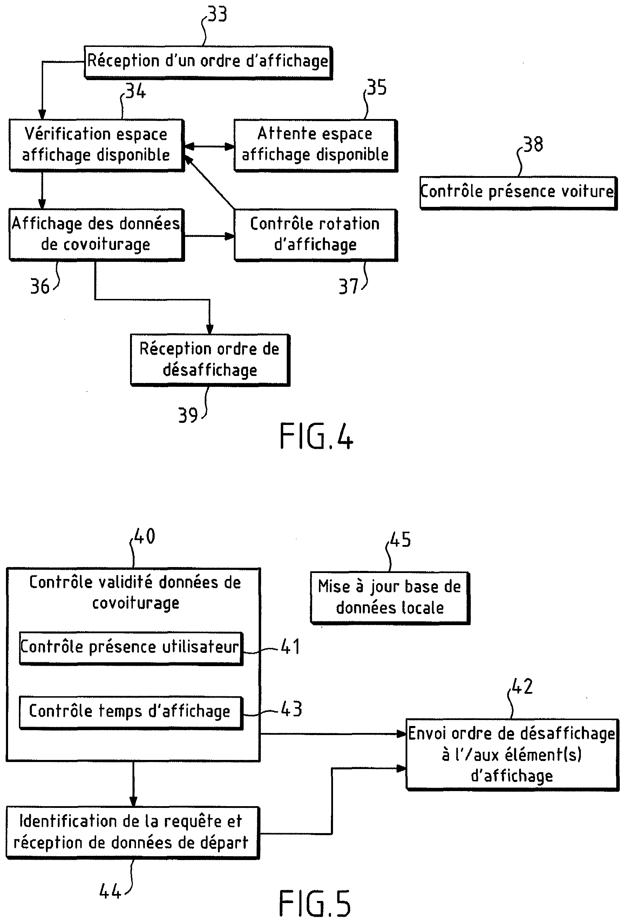

La figure 4 représente schématiquement le mode de fonctionnement d'un élément d'affichage.

Lorsqu'il reçoit des données de covoiturage sous la forme d'un ordre d'affichage (étape 33), l'élément d'affichage 2 doit afficher ces données afin d'avertir de la demande les conducteurs du flux de circulation. Comme indiqué ci-dessus, le panneau 12 présente un espace limité pour l'affichage de demandes de covoiturage. En conséquence, l'élément d'affichage 2 vérifie la disponibilité d'affichage du panneau 12 (étape 34). Si le panneau 12 ne peut pas afficher immédiatement les données de covoiturage reçues, il les met en attente (étape 35). Si au contraire le panneau 12 peut afficher directement les données de covoiturage, lesdites données de covoiturage sont affichées sur le panneau 12 (étape 36).

L'élément d'affichage 2 comporte une horloge permettant de contrôler la rotation des données de covoiturage affichées (étape 37). Ainsi, au-delà d'un temps donné, les demandes de covoiturage en cours d'affichage sont mises en attente et remplacées par des demandes de covoiturage en attente.

Selon un mode de réalisation, en tâche de fond, l'élément d'affichage 2 contrôle de manière permanente la présence de véhicules dans le flux de circulation (étape 38). En l'absence de véhicule dans le flux de circulation, l'élément d'affichage 2 met en veille le panneau 12.

Aussi longtemps que l'élément d'affichage 2 ne reçoit pas de données invalidant une demande de covoiturage, les données de covoiturage correspondantes sont affichées / conservées en attente d'affichage. Dès lors que l'élément d'affichage 2 reçoit un ordre de désaffichage consécutif à l'annulation ou à la satisfaction d'une demande de covoiturage (étape 39), les données correspondant à cette demande de covoiturage sont retirées de l'affichage ou de la liste d'attente de l'élément d'affichage 2.

La figure 5 représente schématiquement les autres fonctions de la borne de saisie 7 de la figure 3 hors saisie de demande de covoiturage.

L'ordinateur de la borne de saisie 7 contrôle en continu la validité des demandes de covoiturage en cours d'affichage (étape 40). Pour cela, la borne de saisie effectue, au moins une fois ou en permanence, un contrôle de la présence du demandeur (étape 41).

Le contrôle de présence 41 peut se faire par géolocalisation si le demandeur possède un téléphone portable identifié qui est configuré pour communiquer sa position à un service de géolocalisation auquel est relié l'ordinateur de la borne de saisie 7. Le contrôle de présence peut également se faire par détection d'une perte de communication/connexion directe entre un dispositif électronique possédé par le demandeur et la borne de saisie 7, par exemple par la perte de connexion en bluetooth entre le téléphone portable du demandeur et la borne de saisie 7. Lorsque la borne de saisie 7 constate par géolocalisation l'éloignement du téléphone portable du demandeur par rapport à la station de covoiturage 1, la borne de saisie 7 envoie une demande de confirmation de de maintien de la demande sur le téléphone portable du demandeur. Sans confirmation du maintien de la demande de covoiturage de la part du demandeur, la demande est annulée et la borne de saisie 7 envoie l'ordre de désaffichage à ou aux éléments d'affichage concernés (étape 42). La demande de covoiturage est automatiquement annulée lorsque la géolocalisation du téléphone portable du demandeur indique que le demandeur ne s'est pas rapproché de la station de covoiturage après un délai donné.

Le contrôle de validité de la demande de covoiturage 40 comporte également une étape de contrôle de temps écoulé (étape 43). Au-delà d'un certain temps écoulé depuis la création de la demande de covoiturage, une demande de confirmation de maintien de la demande est envoyée au demandeur, par exemple sur son téléphone portable (de manière analogue au contrôle de présence 41) ou sur la borne de saisie 7. Le défaut de confirmation de maintien par le demandeur entraîne l'annulation de la demande de covoiturage et l'envoi de l'ordre de désaffichage correspondant à l'élément ou aux éléments d'affichage 2 concernés (étape 42).

Dans un mode de réalisation, l'affichage d'une demande de covoiturage peut être annulé à distance, par exemple par le serveur distant connecté à l'élément d'affichage 2. Le serveur distant peut ainsi envoyer un ordre de désaffichage à l'élément d'affichage 2 en réponse à la réception d'une confirmation qu'un conducteur a indiqué qu'il souhaite prendre le demandeur et satisfaire sa demande de covoiturage. Le conducteur peut envoyer cette information d'une pluralité de manière, par exemple via une application pour téléphone portable, via son véhicule dans le cas d'un véhicule connecté ou autre. Cette fonctionnalité permet d'éviter qu'une pluralité de conducteurs ne se dirigent vers la station de covoiturage 1 pour répondre à une même demande de covoiturage dès lors qu'un conducteur a décidé de répondre positivement à cette demande de covoiturage.

Lorsqu'un conducteur s'extrait du flux de circulation de véhicule pour satisfaire une demande de covoiturage, il s'arrête sur la zone d'arrêt 4 de la station de covoiturage 1. Le conducteur indique alors aux personnes présentes à la station de covoiturage 1 la demande qu'il souhaite satisfaire et le demandeur correspondant se fait connaître du conducteur.

Préalablement à son départ, le demandeur peut indiquer que sa demande de covoiturage est satisfaite (étape 44). Pour cela, le demandeur active le bouton dédié de la borne de saisie 7. L'information de satisfaction d'une demande de covoiturage est soumise à la saisie de l'identification de la demande, par exemple par identification du demandeur, identification du titre de transport via code barre ou QR code, carte personnelle sans contact, lecture optique d'un QR Code, sur l'écran de la borne de saisie 7, par message texte de type « SMS » ou autre.

Dès lors que le demandeur a saisi l'information de départ (étape 44), l'ordre de désaffichage de la demande est envoyé à l'élément ou aux éléments d'affichage 2 concernés (étape 42).

Dans un mode de réalisation, la plaque d'immatriculation des véhicules s'arrêtant à la zone d'arrêt 4 est scannée. Dans un mode de réalisation, le scan de la plaque d'immatriculation d'un véhicule peut être enclenché dès qu'un véhicule est détecté sur la zone d'arrêt 4, par exemple à l'aide d'un détecteur de présence de véhicule. Dans un autre mode de réalisation, le scan de la plaque d'immatriculation d'un véhicule peut être enclenché dès lors qu'un demandeur indique que sa demande est satisfaite à la borne de saisie 7. Dans un autre mode de réalisation, le scan de la plaque d'immatriculation est enclenché dès lors que la présence du conducteur proposant le covoiturage pour la destination en question, et éventuellement après confirmation du passager en cours de déplacement qui aura été prévenu via son téléphone portable (site web, application, SMS...), est confirmée. La plaque d'immatriculation des véhicules de chaque conducteur est mémorisée et archivée. En cas de besoin, par exemple lorsqu'un problème est rencontré par un demandeur lors du trajet, il est alors possible ultérieurement de consulter la liste des plaques d'immatriculation archivées pour identifier le véhicule en cause. La plaque d'immatriculation du véhicule peut également être notée par le demandeur et envoyée par message depuis son téléphone portable à un numéro spécifiquement mis en place pour cela. Une confirmation de bon enregistrement peut lui est immédiatement envoyée par message.

Dans un autre mode de réalisation, une vidéo surveillance de la zone d'arrêt 4 est déclenchée dès lors qu'un véhicule s'arrêtant sur la zone d'arrêt est détecté. Les données relatives à la vidéo surveillance pourront alors être consultées par la suite.

En tâche de fond du contrôle de validité des données de covoiturage (étape 40), la borne de saisie 7 effectue de manière régulière des mises à jour de sa base de données locale (étape 45). Cette mise à jour permet entre autre d'avoir localement les données d'identification des demandeurs sans avoir à les télécharger depuis le réseau distant à chaque identification à la borne de saisie 7. La base de données locale de la borne de saisie permet au système de covoiturage de fonctionner même en cas de problème de connexion ponctuel au réseau distant. Afin de ne pas surcharger la base de données de la borne de saisie 7, la base de données de la borne de saisie 7 peut ne comporter que les données relatives aux comptes des demandeurs ayant déjà utilisé ou utilisant régulièrement cette borne de saisie 7.

La figure 6 représente schématiquement un système de covoiturage incluant un système d'information central 46.

Le système d'information 46 présente des liaisons 57 avec les bornes de saisie 7 de plusieurs stations de covoiturage 1 (une seule station de covoiturage 1 est représentée sur la figure 6 par mesure de simplicité). Le système d'information 46 est relié par une liaison 58 à un service de télécommunication par SMS 59. Le système d'information 46 est relié par une liaison 60 à un serveur web 51 destiné aux utilisateurs.

Dans la description ci-dessous, la communication entre la borne de saisie 7 d'une station de covoiturage 1 et un panneau d'affichage 12 est une liaison radio ou filaire directe. Alternativement, il peut être prévu des liaisons entre les panneaux d'affichage 12 et le système d'information 46, comme indiqué par la flèche 61. La liaison 61 peut être radio, filaire, via un réseau téléphonique ou autre. Cet agencement permet d'exploiter par exemple un panneau d'affichage 12 de manière mutualisée pour plusieurs stations de covoiturage 1.

En outre, le système d'information peut également communiquer les demandes de covoiturage directement à des dispositifs d'information 64. De tels dispositifs d'information sont, par exemple, un tableau de bord du véhicule d'un conducteur ou encore le téléphone portable d'un tel conducteur. La communication des demandes de covoiturage à ce type de dispositifs d'information permet de communiquer les informations de la demande de covoiturage aux conducteurs qui ne sont pas dans le flux de circulation depuis lequel sont lisibles les informations affichées par l'élément d'affichage 2 connecté à une station de covoiturage 1, mais qui passent à proximité. La proximité du véhicule est calculée par tout moyen adapté tel que par géolocalisation du dispositif d'information 64. La communication des demandes de covoiturage à proximité peut se faire par exemple via une application dédiée installée sur le dispositif d'information 64, par émission des demandes de covoiturage à destination de tout dispositif d'information 64 à proximité de la borne de saisie 7 ou autre.

L'ensemble de gestion de système de covoiturage comporte le système d'information 46 distant auquel se connecte la borne de saisie 7 pour remplir différentes fonctions, par exemple afin d'actualiser sa base de données locale ou recevoir des demandes de covoiturage par d'autres interfaces que l'organe de saisie 9.

Dans un mode de réalisation illustré sur la figure 6, un demandeur 49 ou 47 peut définir sa demande de covoiturage via une application dédiée 50 (ou tierce) comme indiqué par la flèche 62 ou bien par message depuis son téléphone portable 48 comme indiqué par la flèche 63. Ce mode de définition des demandes de covoiturage permet de remplacer la saisie à la borne de saisie 7, par exemple lorsque la borne de saisie est déjà occupée par un autre demandeur.

Le contrôle de présence du demandeur peut être effectué de différentes manières. Selon un mode de réalisation, la borne de saisie 7 affiche en continu ou bien après action sur un bouton dédié de la borne de saisie 7 un code d'identification devant être utilisé par le demandeur lorsqu'il définit sa demande via son téléphone. Ce code d'identification permet de s'assurer que la demande est envoyée par une personne qui est suffisamment proche de la borne de saisie 7 pour avoir accès au code d'identification affiché. Ce code d'identification évolue périodiquement par exemple toutes les cinq minutes, pour éviter les utilisations frauduleuses.

Un mode de réalisation alternatif prévoit la validation d'une demande définie à distance par contrôle de la présence d'un demandeur 49 à proximité de la station de covoiturage 1 par géolocalisation de son téléphone portable 50, la demande n'étant validée et affichée que si le téléphone portable 50 du demandeur 49 est géolocalisé à proximité de la station de covoiturage 1 ou en chemin pour rejoindre la station de covoiturage 1. Dans une variante, le contrôle de présence se fait par l'établissement d'une connexion locale telle qu'une connexion bluetooth.

Un service web 51 permet aux utilisateurs et conducteurs de gérer leurs comptes d'identification via le navigateur web d'un ordinateur distant 52 ou bien d'un smartphone. La gestion du compte permet d'alimenter financièrement le compte ainsi que d'optimiser un certain nombre de paramètres tels que les préférences de destinations, de nombre de personnes, etc. Le service web permet également aux conducteurs de créer un compte d'identification pour recevoir leur indemnisation. Ce service web permet également de consulter l'historique des données de covoiturages du compte utilisateur.

A l'issue d'un trajet ou dans une période de temps ultérieure prédéfinie, le conducteur utilise le service web pour saisir les codes d'identification des titres de transport des personnes qu'il a transportées, ce qui entraîne le transfert des indemnités correspondantes sur son compte.

Le système d'information 46 permet également la gestion de différentes fonctions du système de covoiturage. Par exemple, le système d'information 46 permet de mettre à jour les données relatives au calcul d'indemnisation, la gestion des données de géolocalisation des bornes, la gestion des informations administratives relatives aux différentes stations de covoiturage (propriétaire, collectivité responsable des stations de covoiturage et/ou des éléments d'affichage, etc.), la gestion du fonctionnement des stations de covoiturage, le traitement des données statistiques par exemple pour le calcul du temps d'attente, le stockage des informations relatives au statut du système de covoiturage, le suivi géolocalisé des demandeurs, etc.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Système de covoiturage comportant :

   - une station de covoiturage (1) située à proximité d'une voirie, la voirie définissant une voie de circulation apte à accueillir un flux de circulation (3) dans un sens de circulation donné sur la voie de circulation, la station de covoiturage comprenant un mobilier urbain et une zone d'arrêt (4) accessible directement ou via une voie dédiée à la station de covoiturage depuis la voie de circulation et apte à recevoir un véhicule provenant du flux de circulation,
   - un élément d'affichage (2) situé en amont de la station de covoiturage par rapport au flux de circulation, l'élément d'affichage (2) étant situé à une position fixe le long de la voie de circulation en amont de la station de covoiturage par rapport au sens de circulation de la voie de circulation, l'élément d'affichage comportant :

     ○ une interface de communication apte à recevoir un ordre d'affichage d'une demande de covoiturage, l'ordre d'affichage de la demande de covoiturage comportant au moins une information de destination
     ○ un moyen d'affichage (12) apte à afficher les données de la demande de covoiturage contenues dans l'ordre d'affichage de manière visible par des conducteurs des véhicules du flux de circulation

   - un ordinateur configuré pour

○ recevoir la demande de covoiturage,
o effectuer un contrôle de validité de la demande de covoiturage, le contrôle de validité comprenant l'étape de contrôler la présence du demandeur dans la station de covoiturage par géolocalisation du téléphone portable du demandeur, la demande étant déterminée valide lorsque le demandeur est présent à la station de covoiturage et invalide lorsque le demandeur n'est pas présent à la station de covoiturage,
○ lorsque la demande de covoiturage est valide transmettre l'ordre d'affichage de la demande de covoiturage à l'élément d'affichage afin d'afficher la destination de la demande de covoiturage sur le moyen d'affichage de manière visible par des conducteurs des véhicules du flux de circulation et, lorsque la demande n'est pas valide, ne pas transmettre l'ordre d'affichage de la demande de covoiturage à l'élément d'affichage.

2.  Système de covoiturage selon la revendication 1, dans lequel la station de covoiturage comporte en outre une borne de saisie (7), la borne de saisie comportant :

    - une interface utilisateur (8, 9, 10, 11) permettant la définition des données d'une demande de covoiturage par un utilisateur,
    - une interface de communication reliée à l'élément d'affichage, l'interface de communication de la borne étant apte à transmettre l'ordre d'affichage de la demande de covoiturage à l'interface de communication de l'élément d'affichage.

3.  Système de covoiturage selon la revendication 2, dans lequel le contrôle de présence est réalisé par connexion directe entre le téléphone portable du demandeur et la borne de saisie (7).

4.  Système de covoiturage selon l'une des revendications 2 à 3, dans lequel la borne de saisie est configurée pour transmettre l'ordre d'affichage de la demande de covoiturage à l'élément d'affichage.

5.  Système de covoiturage comportant :

    - une station de covoiturage (1) située à proximité d'une voirie, la voirie définissant une voie de circulation apte à accueillir un flux de circulation (3) dans un sens de circulation donné sur la voie de circulation, la station de covoiturage comprenant un mobilier urbain et une zone d'arrêt (4) accessible directement ou via une voie dédiée à la station de covoiturage depuis la voie de circulation et apte à recevoir un véhicule provenant du flux de circulation, la station de covoiturage comportant en outre une borne de saisie (7),
    - un élément d'affichage (2) situé en amont de la station de covoiturage par rapport au flux de circulation, l'élément d'affichage (2) étant situé à une position fixe le long de la voie de circulation en amont de la station de covoiturage par rapport au sens de circulation de la voie de circulation, l'élément d'affichage comportant :

        o une interface de communication apte à recevoir un ordre d'affichage d'une demande de covoiturage, l'ordre d'affichage de la demande de covoiturage comportant au moins une information de destination
        ○ un moyen d'affichage (12) apte à afficher les données de la demande de covoiturage contenues dans l'ordre d'affichage de manière visible par des conducteurs des véhicules du flux de circulation

    - un ordinateur configuré pour

        ○ recevoir la demande de covoiturage,
        ○ effectuer un contrôle de validité de la demande de covoiturage, le contrôle de validité comprenant l'étape de contrôler la présence du demandeur dans la station de covoiturage par identification du demandeur à la borne de saisie (7) au moyen d'un organe de saisie (9) de la borne de saisie (7), la demande étant déterminée valide lorsque le demandeur est présent à la station de covoiturage et invalide lorsque le demandeur n'est pas présent à la station de covoiturage,
        ○ lorsque la demande de covoiturage est valide transmettre l'ordre d'affichage de la demande de covoiturage à l'élément d'affichage afin d'afficher la destination de la demande de covoiturage sur le moyen d'affichage de manière visible par des conducteurs des véhicules du flux de circulation et, lorsque la demande n'est pas valide, ne pas transmettre l'ordre d'affichage de la demande de covoiturage à l'élément d'affichage.

la borne de saisie comportant :

    - une interface utilisateur (8, 9, 10, 11), l'organe de saisie (9) permettant la définition des données d'une demande de covoiturage par un utilisateur et l'identification du demandeur,
    - une interface de communication reliée à un élément d'affichage, l'interface de communication de la borne étant apte à transmettre l'ordre d'affichage de la demande de covoiturage à l'interface de communication de l'élément d'affichage.

**6.** Système de covoiturage selon l'une des revendications 1 à 5, comportant en outre un système de traitement de données (46) comportant une interface d'entrée (58, 62) apte à recevoir des données d'une demande de covoiturage depuis un service web (51) ou un service de télécommunications (59).

**7.** Système de covoiturage selon l'une des revendications 1 à 6, dans lequel l'élément d'affichage (2) est situé en amont de la station de covoiturage par rapport au flux de circulation à une distance correspondant à la distance parcourue par un véhicule roulant à la vitesse maximale autorisée sur ladite voie de circulation pendant entre 5 et 60 secondes, de préférence entre 10 et 20 secondes.

**8.** Système de covoiturage selon l'une des revendications 1 à 7, dans lequel l'ordinateur est configuré pour:

- Recevoir des données de départ associées à une demande de covoiturage
- Interrompre l'affichage de données de la demande de covoiturage par l'élément d'affichage en réponse à la réception des données de départ associées à ladite demande de covoiturage.

**9.** Système de covoiturage selon l'une des revendications 1 à 8, dans lequel l'ordinateur est en outre configuré pour :

- calculer le temps écoulé depuis la réception des données de la demande de covoiturage,
- interrompre l'affichage de données de ladite demande de covoiturage par l'élément d'affichage en réponse à un calcul de temps écoulé supérieur à un seuil de temps écoulé.

**10.** Système de covoiturage selon l'une des revendications 1 à 9, dans lequel l'ordinateur est en outre configuré pour :

- calculer un tarif de demande de covoiturage en fonction de la destination de la demande de covoiturage
- inclure le tarif dans l'ordre d'affichage transmis afin d'afficher le tarif calculé de la demande de covoiturage sur le moyen d'affichage de manière visible par des conducteurs des véhicules du flux de circulation.

**11.** Système de covoiturage selon l'une des revendications 1 à 10, dans lequel l'ordinateur est en outre configuré pour :

- calculer un itinéraire multimodal entre la station de covoiturage et la destination comportant une combinaison de modes de transport distincts incluant le covoiturage.

**12.** Système de covoiturage selon l'une des revendications 1 à 11, dans lequel l'ordinateur est en outre configuré pour :

- contrôler la présence du demandeur associé à la demande de covoiturage à proximité de la station de covoiturage ;
- interrompre l'affichage de données de ladite demande de covoiturage par l'élément d'affichage en réponse à une détection de l'éloignement physique entre le demandeur et la station de covoiturage.

**13.** Système de covoiturage selon l'une des revendications 1 à 12, dans lequel la station de covoiturage comporte une pluralité de zones d'arrêt (4) accessibles depuis la voie de circulation et aptes à recevoir un véhicule provenant du flux de circulation (3), la station de covoiturage (1) comportant en outre pour chaque zone d'arrêt (4) un élément d'affichage complémentaire respectif, chaque élément d'affichage complémentaire comportant

- une interface de communication apte à recevoir une instruction d'affichage respective correspondant à une demande de covoiturage respective, ladite demande de covoiturage comportant au moins une information de destination,
- un moyen d'affichage apte à afficher les données de ladite demande de covoiturage contenues dans ladite instruction d'affichage,

et dans lequel l'ordinateur est configuré pour transmettre à chaque élément d'affichage complémentaire une instruction d'affichage respective afin d'afficher sur ledit élément d'affichage complémentaire les données de la demande de covoiturage respective afin d'associer à chaque élément d'affichage complémentaire l'une parmi les demandes de covoiturage en attente de satisfaction.

**14.** Système de covoiturage selon la revendication 13, dans lequel chaque zone d'arrêt (4) comporte en outre un moyen de détection apte à détecter l'arrêt d'un véhicule sur ladite zone d'arrêt (4), l'ordinateur étant configuré pour interrompre l'affichage de la demande de covoiturage sur l'élément d'affichage complémentaire correspondant à ladite zone d'arrêt en réponse à la détection de l'arrêt du véhicule sur ladite zone d'arrêt (4).

**Patentansprüche**

1. Fahrgemeinschaftssystem, umfassend:

    - eine Fahrgemeinschaftsstation (1) in der Nähe einer Straße, die eine Fahrspur definiert, die in der Lage ist, einen Verkehrsfluss (3) in einer vorgegebenen Verkehrsrichtung auf der Fahrspur aufzunehmen, wobei die Fahrgemeinschaftsstation eine Straßenverkehrs-Installation und einen Haltebereich (4), welcher direkt oder von der Fahrspur über eine der Fahrgemeinschaftsstation zugehörigen Fahrspur zugänglich ist und der in der Lage ist, ein Fahrzeug aus dem Verkehrsfluss aufzunehmen, umfasst,
    - ein Anzeigenelement (2), welches in Bezug auf den Verkehrsfluss stromaufwärts zu der Fahrgemeinschaftsstation angeordnet ist, wobei das Anzeigeelement (2) an einer festen Position entlang der Fahrspur stromaufwärts der Fahrgemeinschaftsstation in Bezug auf die Verkehrsrichtung der Fahrspur angeordnet ist, wobei das Anzeigeelement umfasst:

        ◦ eine Kommunikationsschnittstelle, welche in der Lage ist, eine Anzeigenreihenfolge eines Fahrgemeinschaftsauftrags zu empfangen, wobei die Anzeigenreihenfolge des Fahrgemeinschaftsauftrags mindestens eine Zielinformation enthält
        ◦ eine Anzeigevorrichtung (12), die in der Lage ist, die in der Anzeigenreihenfolge enthaltenen Fahrgemeinschaftsauftragsdaten in einer für die Fahrer von Fahrzeugen im Verkehrsfluss sichtbaren Weise anzuzeigen

    - einen Computer, konfiguriert um

        ◦ den Fahrgemeinschaftsauftrag zu empfangen,
        ◦ einer Gültigkeitskontrolle des Fahrgemeinschaftsauftrags durchzuführen, wobei die Gültigkeitskontrolle den Schritt der Prüfung der Anwesenheit des Auftraggebers in der Fahrgemeinschaftsstation durch Geolokalisierung des Mobiltelefons des Auftraggebers umfasst, wobei der Auftrag als gültig gilt, wenn der Auftraggeber in der Fahrgemeinschaftsstation anwesend ist, und als ungültig, wenn der Auftraggeber nicht in der Fahrgemeinschaftsstation anwesend ist,
        ◦ wenn der Fahrgemeinschaftsauftrag gültig ist, die Anzeigenreihenfolge des Fahrgemeinschaftsauftrags an das Anzeigeelement zu übermitteln, um das Ziel der Fahrgemeinschaftsauftrag auf dem Anzeigeelement für die Fahrer der im Verkehrsfluss befindlichen Fahrzeuge sichtbar anzuzeigen, und, wenn der Auftrag ungültig ist, die Anzeigenreihenfolge des Fahrgemeinschaftsauftrags nicht an das Anzeigeelement zu übermitteln.

2. Fahrgemeinschaftssystem gemäß Anspruch 1, wobei die Fahrgemeinschaftsstation ferner einen Eingabeterminal (7) umfasst, wobei der Eingabeterminal (7) umfasst:

    - eine Benutzerschnittstelle (8, 9, 10, 11), die es ermöglicht, die Daten eines Fahrgemeinschaftsauftrags durch einen Benutzer zu definieren,
    - eine Kommunikationsschnittstelle, die mit dem Anzeigeelement verbunden ist, wobei die Kommunikationsschnittstelle des Terminals in der Lage ist, die Anzeigenreihenfolge des Fahrgemeinschaftsauftrags an die Kommunikationsschnittstelle des Anzeigeelements zu übertragen.

3. Fahrgemeinschaftssystem gemäß Anspruch 2, bei dem die Anwesenheitskontrolle durch direkte Verbindung zwischen dem Mobiltelefon des Auftraggebers und dem Eingabeterminal (7) erfolgt.

4. Fahrgemeinschaftssystem gemäß einem der Ansprüche 2 bis 3, wobei das Eingabeterminal so konfiguriert ist, dass es die Anzeigereihenfolge der Fahrgemeinschaftsauftrag an das Anzeigeelement überträgt.

5. Fahrgemeinschaftssystem, umfassend:

    - eine Fahrgemeinschaftsstation (1) in der Nähe einer Straße, die eine Fahrspur definiert, die in der Lage ist, einen Verkehrsfluss (3) in einer vorgegebenen Verkehrsrichtung auf der Fahrspur aufzunehmen, wobei die Fahrgemeinschaftsstation eine Straßenverkehrs-Installation und einen Haltebereich (4) umfasst, welcher direkt oder über von der Fahrspur über eine der Fahrgemeinschaftsstation zugehörigen Fahrspur zugänglich ist und der in der Lage ist, ein Fahrzeug aus dem Verkehrsfluss aufzunehmen, wobei die Fahrgemeinschaftsstation weiterhin ein Eingabeterminal (7) umfasst,
    - ein Anzeigeelement (2), welches in Bezug auf den Verkehrsfluss stromaufwärts der Fahrgemeinschaftsstation angeordnet ist, wobei das Anzeigeelement (2) an einer festen Position entlang der Fahrspur stromaufwärts der Fahrgemeinschaftsstation in Bezug auf die Verkehrsrichtung der Fahrspur angeordnet ist, wobei das Anzeigeelement umfasst:

◦ eine Kommunikationsschnittstelle, welche in der Lage ist, eine Anzeigenreihenfolge eines Fahrgemeinschaftsauftrags zu empfangen, wobei die Anzeigenreihenfolge des Fahrgemeinschaftsauftrags mindestens eine Zielinformation enthält,

◦ eine Anzeigenvorrichtung (12), die in der Lage ist, die in der Anzeigenreihenfolge enthaltenen Fahrgemeinschaftsauftragsdaten in einer für die Fahrer von Fahrzeugen im Verkehrsfluss sichtbaren Weise zu anzeigen,

- einen Computer, konfiguriert um

◦ den Fahrgemeinschaftsauftrag zu empfangen,

◦ einer Gültigkeitskontrolle des Fahrgemeinschaftsauftrags durchzuführen, wobei die Gültigkeitskontrolle den Schritt der Prüfung der Anwesenheit des Auftraggebers in der Fahrgemeinschaftsstation durch Identifizieren des Auftraggebers an dem Eingabeterminal (7) mittels eines Eingabeelements (9) des Eingabeterminals (7) umfasst, wobei der Auftrag als gültig bestimmt wird, wenn der Auftraggeber an der Fahrgemeinschaftsstation anwesend ist, und als ungültig, wenn der Auftraggeber nicht an der Fahrgemeinschaftsstation anwesend ist,

◦ wenn die Fahrgemeinschaftsauftrag gültig ist, die Anzeigenreihenfolge des Fahrgemeinschaftsauftrags an das Anzeigeelement zu übermitteln, um das Ziel der Fahrgemeinschaftsauftrag auf dem Anzeigeelement für die Fahrer der im Verkehrsfluss befindlichen Fahrzeuge sichtbar anzuzeigen, und, wenn der Auftrag ungültig ist, die Anzeigenreihenfolge des Fahrgemeinschaftsauftrags nicht an das Anzeigeelement zu übermitteln.

wobei das Eingabeterminal (7) umfasst:

- eine Benutzerschnittstelle (8, 9, 10, 11), die es ermöglicht, die Daten eines Fahrgemeinschaftsauftrags durch einen Benutzer und Identifizierung des Auftraggebers zu definieren,
- eine Kommunikationsschnittstelle, die mit dem Anzeigeelement verbunden ist, wobei die Kommunikationsschnittstelle des Terminals in der Lage ist, die Anzeigenreihenfolge des Fahrgemeinschaftsauftrags an die Kommunikationsschnittstelle des Anzeigeelements zu übermitteln.

6. Fahrgemeinschaftssystem gemäß einem der Ansprüche 1 bis 5, weiterhin umfassend ein Datenverarbeitungssystem (46), welches eine Eingangsschnittstelle (58, 62) umfasst, welche in der Lage ist, Fahrgemeinschaftsauftragsdaten von einem Webdienst (51) oder einem Telekommunikationsservice (59) zu empfangen.

7. Fahrgemeinschaftssystem gemäß einem der Ansprüche 1 bis 6, wobei das Anzeigeelement in Bezug auf den Verkehrsfluss (2) stromaufwärts der Fahrgemeinschaftsstation in einem Abstand angeordnet ist, der der Entfernung entspricht, die ein Fahrzeug zurücklegt, welches mit der maximal zulässigen Geschwindigkeit auf der Fahrspur zwischen 5 und 60 Sekunden, vorzugsweise zwischen 10 und 20 Sekunden, fährt.

8. Fahrgemeinschaftssystem gemäß einem der Ansprüche 1 bis 7, wobei der Computer konfiguriert ist, um:

- Abfahrtsdaten zu empfangen, die mit einem Fahrgemeinschaftsauftrag verknüpft sind
- die Anzeige von Daten der Fahrgemeinschaftsauftrag durch das Anzeigeelement als Reaktion auf den Empfang der mit der genannten Fahrgemeinschaftsauftrag verbundenen Abfahrtsdaten zu unterbrechen.

9. Fahrgemeinschaftssystem gemäß einem der Ansprüche 1 bis 8, wobei der Computer weiterhin konfiguriert ist, um:

- die seit dem Empfang der Daten des Fahrgemeinschaftsauftrags verstrichene Zeit zu berechnen,
- die Anzeige der Daten des Fahrgemeinschaftsauftrags durch das Anzeigeelement als Reaktion auf eine Berechnung der verstrichenen Zeit, die größer als ein Schwellenwert für die verstrichene Zeit ist, zu unterbrechen.

10. Fahrgemeinschaftssystem gemäß einem der Ansprüche 1 bis 9, wobei der Computer weiterhin konfiguriert ist, um:

- einen Tarif für den Fahrgemeinschaftsauftrag auf der Grundlage des Ziels des Fahrgemeinschaftsauftrags zu berechnen
- den Fahrpreis in die übermittelte Anzeigenreihenfolge aufzunehmen, um den berechneten Fahrpreis des Fahrgemeinschaftsauftrags auf der Anzeigevorrichtung für die Fahrer der im Verkehrsfluss befindlichen Fahrzeuge sichtbar anzuzeigen.

11. Fahrgemeinschaftssystem gemäß einem der Ansprüche 1 bis 10, wobei der Computer weiterhin konfiguriert ist, um:

- eine multimodale Fahrtroute von der Fahrgemeinschaftsstation zum Zielort, die eine Kombination verschiedener Verkehrsmittel einschließlich Fahrgemeinschaften umfasst, zu berechnen.

12. Fahrgemeinschaftssystem gemäß einem der Ansprüche 1 bis 11, wobei der Computer weiterhin konfiguriert ist, um:

- die Anwesenheit des mit dem Fahrgemeinschaftsauftrag verbundenen Auftraggebers in der Nähe der Fahrgemeinschaftsstation zu kontrollieren;
- der Anzeige der Daten des Fahrgemeinschaftsauftrags durch das Anzeigeelement als Reaktion auf eine Erfassung der physischen Entfernung zwischen dem Auftraggeber und der Fahrgemeinschaftsstation zu unterbrechen.

13. Fahrgemeinschaftssystem gemäß einem der Ansprüche 1 bis 12, wobei die Fahrgemeinschaftsstation (1) eine Vielzahl von Haltebereiche (4) umfasst, die von der Fahrspur aus zugänglich sind und in der Lage sind, ein Fahrzeug aus dem Verkehrsfluss (3) aufzunehmen, wobei die Fahrgemeinschaftsstation (1) ferner für jeden Haltebereich (4) ein jeweiliges zusätzliches Anzeigeelement umfasst, wobei jedes zusätzliche Anzeigeelement umfasst:

- eine Kommunikationsschnittstelle, die in der Lage ist, eine jeweilige Anzeigenreihenfolge zu empfangen, die einem jeweiligen Fahrgemeinschaftsauftrag entspricht, wobei der Fahrgemeinschaftsauftrag mindestens eine Zielinformation umfasst,
- eine Anzeigevorrichtung, welche in der Lage ist, die Daten des Fahrgemeinschaftsauftrags, welche in dem Anzeigebefehl enthalten sind, anzuzeigen,

und wobei der Computer konfiguriert ist, um an jedes zusätzliche Anzeigeelement einen entsprechenden Anzeigebefehl zu übertragen, um auf dem zusätzlichen Anzeigeelement die Daten des entsprechenden Fahrgemeinschaftsauftrags anzuzeigen, um jedem zusätzliche Anzeigeelement einen der offenen Fahrgemeinschaftsaufträge zuzuordnen.

14. Fahrgemeinschaftssystem gemäß Anspruch 13, wobei jeder Haltebereich (4) weiterhin eine Erfassungsvorrichtung umfasst, die in der Lage ist, das Anhalten eines Fahrzeugs an dem Haltebereich (4) zu erfassen, wobei der Computer konfiguriert ist, um als Reaktion auf die Erfassung des Anhaltens des Fahrzeugs in dem Haltebereich (4) die Anzeige des Fahrgemeinschaftsauftrags auf dem zusätzlichen Anzeigeelement, welches dem Haltebereich entspricht, zu unterbrechen.

## Claims

1. Carpooling system comprising:

a carpooling station (1) located near a road, the road
defining a traffic lane capable of accommodating a flow of traffic (3) in a given direction of circulation on the traffic lane, the carpooling station comprising street furniture and a stopping area (4) accessible directly or via a lane dedicated to the carpooling station from the traffic lane and capable of receiving a vehicle from the flow of traffic,
a display element (2) located upstream from the carpooling station relative to the flow of traffic, the display element (2) being located at a fixed position along the traffic lane upstream from the carpooling station relative to the direction of circulation of the traffic lane, the display element comprising:

◦ a communication interface capable of receiving an order to display a carpooling request, the order to display the carpooling request comprising at least one item of destination information
◦ a display means (12) capable of displaying the data of the carpooling request contained in the display order such as to be visible to the drivers of the vehicles in the flow of traffic

- a computer configured to

◦ receive the carpooling request,
◦ carry out a validity check on the carpooling request, the validity check comprising the step of checking the presence of the applicant in the carpooling station by geolocation of the applicant's mobile phone, the request being determined to be valid when the applicant is present at the carpooling station
and invalid when the applicant is not present at the carpooling station,
◦ when the carpooling request is valid, transmit the order to display the carpooling request to the display element in order to display the destination of the carpooling request on the display means such as to be visible to the drivers of the vehicles in the flow of traffic and, when the request is not valid, not transmit the order to display the carpooling request to the display element.

2. Carpooling system according to claim 1, wherein the carpooling station further comprises an input terminal (7), the input terminal comprising:

   - a user interface (8, 9, 10, 11) enabling definition of the data of a carpooling request by a user,
   - a communication interface connected to the display element, the communication interface of the terminal being capable of transmitting the order to display the carpooling request to the communication interface of the display element.

3. Carpooling system according to claim 2, wherein the presence check is carried out by direct connection between the applicant's mobile phone and the input terminal (7).

4. Carpooling system according to one of claims 2 to 3, wherein the input terminal is configured to transmit the order to display the carpooling request to the display element.

5. Carpooling system comprising:

   - a carpooling station (1) located near a road, the road defining a traffic lane capable of accommodating a flow of traffic (3) in a given direction of circulation on the traffic lane, the carpooling station comprising street furniture and a stopping area (4) accessible directly or via a lane dedicated to the carpooling station from the traffic lane and capable of receiving a vehicle from the flow of traffic,
   the carpooling station further comprising an input terminal (7),
   - a display element (2) located upstream from the carpooling station relative to the flow of traffic, the display element (2) being located at a fixed position along the traffic lane upstream from the carpooling station relative to the direction of circulation of the traffic lane,
   the display element comprising:

      ∘ a communication interface capable of receiving an order to display a carpooling request, the order to display the carpooling request comprising at least one item of destination information
      ∘ a display means (12) capable of displaying the data of the carpooling request contained in the display order such as to be visible to the drivers of the vehicles in the flow of traffic

   - a computer configured to

      ∘ receive the carpooling request,
      ∘ carry out a validity check on the carpooling request, the validity check comprising the step of checking the presence of the applicant in the carpooling station by identification of the applicant at the input terminal (7) via an input device (9) on the input terminal (7), the request being determined to be valid when the applicant is present at the carpooling station and invalid when the applicant is not present at the carpooling station,
      ∘ when the carpooling request is valid, transmit the order 15 to display the carpooling request to the display element in order to display the destination of the carpooling request on the display means such as to be visible to the drivers of the vehicles in the flow of traffic and, when the request is not valid, not transmit the order to display the carpooling request to the display element,

   the input terminal comprising:

      - a user interface (8, 9, 10, 11), the input device (9) enabling definition of the data of a carpooling request by a user and identification of the applicant,
      - a communication interface connected to a display element, the communication interface of the terminal being capable of transmitting the order to display the carpooling request to the communication interface of the display element.

6. Carpooling system according to one of claims 1 to 5, further comprising a data processing system (46) comprising an input interface (58, 62) capable of receiving carpooling request data from a web service (51) or a telecommunications service (59).

7. Carpooling system according to one of claims 1 to 6, wherein the display element (2) is located upstream from the carpooling station with respect to the traffic flow at a distance corresponding to the distance travelled by a vehicle travelling at the maximum authorised speed on said traffic lane for between 5 and 60 seconds, preferably between 10 and 20 seconds.

8. Carpooling system according to one of claims 1 to 7, wherein the computer is configured to:
   Receive departure data associated with a carpooling request Interrupt the display of carpool request data by the display element in response to receiving the departure data associated with the carpooling request.

9. Carpooling system according to one of claims 1 to 8, wherein the computer is further configured to:

- calculate the time which has elapsed since receiving the data of the carpooling request,
- interrupt the display of the data of the carpooling request by the display element in response to an elapsed time calculation greater than an elapsed time threshold.

10. Carpooling system according to one of claims 1 to 9, wherein the computer is further configured to:

- calculate a carpooling request fare based on the destination of the carpooling request

- include the fare in the display order sent in order to display the calculated fare of the carpooling request on the display means such as to be visible to the drivers of the vehicles in the flow of traffic.

11. Carpooling system according to one of claims 1 to 10, wherein the computer is further configured to:

- calculate a multimodal route between the carpooling station and the destination comprising a combination of distinct modes of transportation including carpooling.

12. Carpooling system according to one of claims 1 to 11, wherein the computer is further configured to:

- check the presence of the applicant associated with the carpooling request near the carpooling station;
- interrupt the display of the data of the carpooling request by the display element in response to a detection of the physical distance between the applicant and the carpooling station.

13. Carpooling system according to one of claims 1 to 12, wherein
the carpooling station comprises a plurality of stopping areas (4) accessible from the traffic lane and capable of receiving a vehicle from the flow of traffic (3), the carpooling station (1) further comprising for each stopping area (4) a respective complementary display element, each complementary display element comprising
a communication interface capable of receiving a respective display instruction corresponding to a respective carpooling request, said carpooling request comprising at least one item of destination information,
a display means capable of displaying the data of said carpooling request contained in said display instruction,
and wherein the computer is configured to transmit a respective display instruction to each complementary display element in order to display the data of the respective carpooling request on said complementary display element, in order to associate one of the carpooling requests waiting to be met with each complementary display element.

14. Carpooling system according to claim 13, wherein each stopping area (4) further comprises a means of detection capable of detecting the stopping of a vehicle on said stopping area (4), the computer being configured to interrupt the display of the carpooling request on the complementary display element corresponding to said stopping area in response to detecting the stopping of the vehicle on said stopping area (4).

FIG.1

FIG.2

Identification de l'utilisateur

Création de compte nouvel utilisateur

Réception données utilisateur connu

Définition d'une demande de covoiturage depuis l'interface utilisateur

Proposition de destinations automatisée

Réception de données de destination

Proposition de nombre de personnes automatisée

Estimation temps d'attente

Définition de données supplémentaires

Réception de données sur le nombre de personne

Calcul de prix

Réception de données de prix

Impression/ envoi titre de transport

Facturation utilisateur

Communication avec le(s) éléments(s) d'affichage

Réception données de statut affichage

Sélection d'un ou plusieurs éléments d'affichage destinataire

Actualisation prix

Envoi ordre d'affichage aux éléments d'affichage

FIG.3

33

Réception d'un ordre d'affichage

34

Vérification espace affichage disponible

35

Attente espace affichage disponible

38

Contrôle présence voiture

Affichage des données de covoiturage

Contrôle rotation d'affichage

36

37

Réception ordre de désaffichage

39

FIG.4

40

Contrôle validité données de covoiturage

Contrôle présence utilisateur — 41

Contrôle temps d'affichage — 43

45

Mise à jour base de données locale

42

Envoi ordre de désaffichage à l'/aux élément(s) d'affichage

Identification de la requête et réception de données de départ

44

FIG.5

FIG.6

**RÉFÉRENCES CITÉES DANS LA DESCRIPTION**

**Documents brevets cités dans la description**

- WO 2014158289 A2